# EUROPÄISCHE PATENTANMELDUNG

(11) **EP 2 662 581 A2**
(43) Veröffentlichungstag der Anmeldung: **13.11.2013**
(21) Anmeldenummer: 13164386.8
(22) Anmeldetag: 19.04.2013
(51) Int. Cl.: F16C 19/38, F16C 33/36, F16C 33/54

(54) **Käfig für ein Rollenlager**

(30) Priorität: 10.05.2012 DE 102012207799
(71) Anmelder: Schaeffler Technologies AG & Co. KG, 91074 Herzogenaurach (DE)
(72) Erfinder: Schröder, Rainer, 97440 Egenhausen (DE)

(57) **Zusammenfassung**

Die Erfindung gibt einen Käfig (2) für ein Rollenlager (26) an, welcher einen ersten (4) und einen zweiten (6) Seitenring und sich zwischen den Seitenringen (4, 6) axial ersteckende Stege (8) umfasst, wobei die Seitenringe (4, 6) und jeweils zwei der Stege (8) eine Tasche (10) zur Aufnahme eines Wälzkörpers (22) bilden. Der erste Seitenring (4) weist an seiner axial innenliegenden Stirnfläche im Bereich einer Tasche (10) einen axial in Richtung zum zweiten Seitenring (6) erstreckenden Haltevorsprung (16) auf, der mit einer stirnseitigen Ausnehmung (20) eines Wälzkörpers (22) in Eingriff bringbar ist. Dabei ist der erste Seitenring (4) als solcher im Bereich des Haltevorsprungs (16) entlang der Umfangsrichtung radial nach innen gewölbt. Weiter gibt die Erfindung ein Rollenlager (26) mit einem solchen Käfig (2) an.

## Beschreibung

### Gebiet der Erfindung

Die Erfindung betrifft einen Käfig für ein Rollenlager, welcher einen ersten und einen zweiten Seitenring und sich zwischen den Seitenringen axial ersteckende Stege umfasst, wobei die Seitenringe und jeweils zwei der Stege eine Tasche zur Aufnahme eines Wälzkörpers bilden. Dabei weist der erste Seitenring an seiner axial innenliegenden Stirnfläche im Bereich einer Tasche einen axial in Richtung zum zweiten Seitenring erstreckenden Haltevorsprung auf, der mit einer stirnseitigen Ausnehmung eines Wälzkörpers in Eingriff bringbar ist. Die Erfindung betrifft weiter ein Rollenlager mit einem solchen Käfig.

### Hintergrund der Erfindung

Ein Käfig eines Rollenlagers dient üblicherweise dazu, die Wälzkörper des Rollenlagers zu führen und sie dabei auf gleichmäßigen Abstand zu halten und an der gegenseitigen Berührung zu hindern.

Ein Käfig der eingangs beschriebenen Art ist beispielsweise in der DE 10 2009 006 859 B3 beschrieben. Der offenbarte Zylinderrollenkäfig umfasst an seinen beiden axialen Enden je ein ringartiges Umfangselement und mehrere, die beiden Umfangselemente miteinander verbindende Stegelemente. In Taschen, welche durch die beiden ringartigen Umfangselemente und jeweils zwei Stegelemente gebildet werden, kann jeweils ein als Zylinderrolle ausgebildeter Wälzkörper angeordnet werden. Zwischen zwei Stegelementen weist die jeweilige, axial innen liegende Stirnfläche der beiden Umfangselemente jeweils eine parallel zu den Stegelementen angeordnete Ausformung auf. Diese Ausformungen können mit endseitigen Ausnehmungen der Zylinderrollen lose in Eingriff gebracht werden. Durch das Zusammenspiel der Ausformungen und der Ausnehmungen soll sich im vormontierten Zustand eine verliersichere Halterung der Zylinderrollen im Zylinderrollenkäfig ergeben. Auf diese Weise soll beim späteren Einbau des so bestückten Zylinderrollenlagerkäfigs auf eine Montagehülse verzichtet werden können. Problematisch hierbei ist jedoch, dass die Zylinderrollen im vormontierten Käfig ein großes radiales Spiel aufweisen, wodurch sich der Zusammenbau des Zylinderrollenlagers erschwert.

### Aufgabe der Erfindung

Der Erfindung liegt die Aufgabe zugrunde, einen Käfig für ein Rollenlager bereitzustellen, mit dessen Hilfe das Rollenlager einfacher montiert werden kann. Ferner liegt der Erfindung die Aufgabe zugrunde, ein Rollenlager anzugeben, welches einfach montiert werden kann.

### Zusammenfassung der Erfindung

Die erst genannte Aufgabe wird gelöst durch einen Käfig für ein Rollenlager, welcher einen ersten und einen zweiten Seitenring und sich zwischen den Seitenringen axial ersteckende Stege umfasst, wobei die Seitenringe und jeweils zwei der Stege eine Tasche zur Aufnahme eines Wälzkörpers bilden. Der erste Seitenring weist an seiner axial innenliegenden Stirnfläche im Bereich einer Tasche einen axial in Richtung zum zweiten Seitenring erstreckenden Haltevorsprung auf, der mit einer stirnseitigen Ausnehmung eines Wälzkörpers in Eingriff bringbar ist. Dabei ist der erste Seitenring als solcher im Bereich des Haltevorsprungs entlang der Umfangsrichtung radial nach innen gewölbt.

Die Erfindung geht dabei von der Überlegung aus, dass es den Zusammenbau eines Rollenlagers vereinfacht, wenn die Wälzkörper verliersicher in dem Käfig vormontiert werden können. Weiter geht die Erfindung von der Überlegung aus, dass die im Käfig vormontierten Wälzkörper insbesondere für die Montage des Rollenlagers ein gewisses axiales und radiales Spiel aufweisen müssen. Dabei soll besonders das radiale Spiel der Wälzkörper nach außen nicht zu groß sein, da dies ansonsten den Zusammenbau des Rollenlagers erschwert. Die Wälzkörper können sich bei der Montage des vormontierten Käfigs innerhalb ihres radialen Spiels radial nach außen bewegen und behindern damit insbesondere die Montage des Außenrings. Ferner kann es dabei zu einem Zusammenstoß des Außenrings mit den Wälzkörpern und dadurch zu Beschädigungen kommen. Daher sieht die Erfindung vor, den Seitenring im Bereich eines Haltevorsprungs, an dem ein Wälzkörper verliersicher positioniert ist, radial nach innen zu wölben. Dadurch ermöglicht es die Erfindung, den Haltevorsprung radial zu positionieren und darüber auf einfache Art das radiale Spiel der vormontierten Wälzkörper zu begrenzen.

Der Käfig ist für ein Rollenlager ausgebildet und weist eine Rotationsachse auf. Dabei kann es sich insbesondere um einen Käfig für ein Zylinderrollenlager, Kegelrollenlager, Tonnenrollenlager oder Pendelrollenlager handeln. Dementsprechend können die in den Käfig einsetzbaren Wälzkörper beispielsweise als Zylinderrolle, Kegelrolle oder Tonnenrolle ausgestaltet sein. Bei der stirnseitigen Ausnehmung eines Wälzkörpers kann es sich insbesondere um eine kreisförmige Ausnehmung handeln, die zentriert an einer Stirnfläche des Wälzkörpers angeordnet ist und deren Durchmesser kleiner ist, als der Durchmesser des Wälzkörpers.

Die axiale Länge der Stege und damit der axiale Abstand der beiden Seitenringe zueinander und die axiale Länge des einzusetzenden Wälzkörpers sind so aufeinander abgestimmt, dass der Wälzkörper innerhalb einer Tasche ein gewisses axiales Spiel hat.

Der Haltevorsprung ist im Bereich einer Tasche, das heißt zwischen zwei benachbarten Stegen, an der axial innen liegenden Stirnfläche des ersten Seitenrings angeordnet. Dabei ist der Haltevorsprung im Bereich dieser Tasche an dem ersten Seitenring in Umfangsrichtung insbesondere nur entlang eines bestimmten Abschnitts umlaufend angeformt. Der Haltevorsprung ist hierbei insbesondere mittig zwischen den beiden benachbarten Stegen angeordnet.

Bevorzugt korrespondiert die axiale Erstreckung des Haltevorsprungs mit der axialen Tiefe der Ausnehmung eines Wälzkörpers derart, dass ein axiales Spiel des in die Tasche eingesetzten Wälzkörpers erhalten bleibt und der Wälzkörper nicht aus der Tasche herausfallen kann.

Im Bereich des Haltevorsprungs ist der erste Seitenring als solcher entlang der Umfangsrichtung radial nach innen gewölbt. Bevorzugt weist die Wölbung entlang der Umfangsrichtung im Wesentlichen die gleiche Krümmung auf, das heißt, dass der Seitenring im Bereich des Haltevorsprungs entlang der Umfangsrichtung im Wesentlichen die Form eines Kreisbogens aufweist. Durch diese radial nach innen gerichtete Wölbung des ersten Seitenrings im Bereich des Haltevorsprungs liegt der Haltevorsprung insgesamt radial weiter innen. Auf diese Weise wird das radiale Spiel eines Wälzkörpers, mit dessen Ausnehmung der radial weiter innen liegende Haltevorsprung in Eingriff steht, nach außen begrenzt. Bei einer festgelegten Ausgestaltung von Haltevorsprung und Ausnehmung, über welche das radiale Spiel des Wälzkörpers in gewissen Grenzen beeinflussbar ist, kann das radiale Spiel insbesondere durch die konkrete Ausgestaltung der Wölbung "eingestellt" werden.

Die erfindungsgemäße Ausgestaltung hat den Vorteil, dass damit ein Rollenlager einfacher montiert werden kann. Durch die Ausgestaltung des Käfigs wird auf einfach Art das radiale Spiel der im Käfig vormontierten Wälzkörper nach außen begrenzt, wodurch insbesondere die Montage des Außenrings vereinfacht wird. Zudem können durch die Anordnung des Haltevorsprungs an einem Seitenring, anstatt beispielsweise an einem Steg, die Gefahr einer Beschädigung der Funktionsfläche des Wälzkörpers beim Einsetzen in den Käfig nahezu ausgeschlossen, sowie im Bereich des Stegs Freiräume für die Schmiermittelzuführung und -verteilung erhalten werden.

Vorzugsweise sind mehrere Taschen ausgebildet, wobei die axial innen liegende Stirnfläche im Bereich einer jeden Tasche einen Haltevorsprung aufweist. Hierbei sind mehrere umfänglich im Wesentlichen gleich voneinander beabstandete Taschen angeordnet, wobei eine Tasche jeweils durch zwei benachbarte Stege und die beiden Seitenringe gebildet wird. Dabei weist die axial innenliegende Stirnfläche des ersten Seitenrings im Bereich einer jeden dieser Taschen einen entsprechenden Haltevorsprung auf, der mit einer entsprechenden stirnseitigen Ausnehmung eines Wälzkörpers in Eingriff gebracht werden kann. Somit können alle im Käfig vormontierten Wälzkörper in ihrem radialen Spiel nach außen begrenzt werden.

Der Haltevorsprung erstreckt sich in einer vorteilhaften Ausführungsform in radialer Richtung über die radiale Höhe der Stirnfläche. Dadurch ist der Haltevorsprung ausreichend sicher und stabil an der Stirnfläche angeordnet und kann dadurch auch größeren Belastungen widerstehen, ohne dass es dabei zu einer plastischen Verformung oder zum Bruch kommt.

Vorteilhafterweise nimmt die axiale Breite des Haltevorsprungs zur Ausbildung einer Einführschräge radial nach innen zu. Insbesondere nimmt die axiale Breite kontinuierlich zu, so dass das Profil des Haltevorsprungs im Wesentlichen nasen- oder keilförmig ausgebildet ist. Durch die Ausbildung der Einführschräge am Haltevorsprung wird das Einsetzen eines Wälzkörpers in die Tasche des Käfigs erleichtert.

An dem ersten Seitenring und/oder an dem zweiten Seitenring ist zweckmäßigerweise ein sich radial nach innen erstreckender Bund angeformt. Ein entsprechender Bund kann also radial nach innen in Richtung der Rotationsachse ausgebildet sein. Hierbei verläuft der Bund bevorzugt schräg oder senkrecht zur Rotationsachse. Ein derartiger Bund bietet insbesondere eine axiale Anschlags- und Wegbegrenzungsfläche für die Wälzkörper. Ferner kann an dem Bund eine Gleitfläche ausgebildet sein, die auf einem Lagerring geführt wird.
In einer zweckmäßigen Ausführungsform ist der Käfig ein Blechkäfig. Dabei kann der Blechkäfig insbesondere aus Stahl oder Messing hergestellt sein. Gegenüber einem Massivkäfig weist der Blechkäfig insbesondere ein geringeres Gewicht auf und lässt sich verhältnismäßig einfach fertigen.

Vorteilhafterweise ist der Käfig einstückig ausgeführt. Hierbei kann der Käfig aus einem Rohling, insbesondere durch Umformen und spanende Bearbeitung, wie beispielsweise Drehen oder Fräsen, hergestellt werden. Wird der Käfig aus einem Blech hergestellt, so wird beispielsweise zunächst ein aus einem Boden und einer zylindrischen Wandung bestehender rotationssymmetrischer Käfigtopf durch Tiefziehen einer Blechronde erzeugt. Nachfolgend wird der Boden ausgestanzt. Die radial nach innen gerichtete Wölbung wird in die zylindrische Wandung im Bereich des axialen Endes des Käfigtopfs eingedrückt, welches den ersten Seitenring bildet. Dabei erstreckt sich die Wölbung zur Ausbildung des Haltevorsprungs axial über den ersten Seitenring hinaus. Anschließend wird die Tasche durch Ausstanzen erzeugt, wobei zur Erzeugung des Haltevorsprungs die Kontur des Haltevorsprungs beim Stanzen ausgespart wird. Der optional zu erzeugende Einführwinkel des Haltevorsprungs kann danach durch Eindrücken gebildet werden. Auf diese Weise kann der Käfig mit einfachen Fertigungsverfahren auch im Rahmen einer automatisierten Fertigung kostengünstig hergestellt werden.

Die auf ein Rollenlager gerichtete Aufgabe wird erfindungsgemäß gelöst durch ein Rollenlager, welches einen Außenring und einen Innenring sowie eine Anzahl von Wälzkörpern umfasst, wobei die Wälzkörper in einem Käfig der vorbeschriebenen Art angeordnet sind.

Das Rollenlager weist eine Rotationsachse auf. Dabei kann es sich insbesondere um ein Zylinderrollenlager, Kegelrollenlager, Tonnenrollenlager oder Pendelrollenlager handeln. Dementsprechend können die Wälzkörper beispielsweise als Zylinderrolle, Kegelrolle oder Tonnenrolle ausgestaltet sein. Dabei werden die Wälzkörper zwischen Innenring und Außenring in dem Käfig geführt.

Die Wälzkörper weisen eine stirnseitige Ausnehmung auf. Hierbei kann nur an einer Stirnfläche oder aber an beiden Stirnflächen des Wälzkörpers eine Ausnehmung ausgebildet sein. Bei der Ausnehmung handelt es sich insbesondere um eine kreisförmige Ausnehmung, die zentriert an der Stirnfläche des Wälzkörpers angeordnet ist und deren Durchmesser kleiner ist, als der Durchmesser des Wälzkörpers.

Das angegebene Rollenlager hat den Vorteil einer einfachen Montage. Durch die Ausgestaltung des Käfigs können die Wälzkörper verliersicher in dem Käfig vormontiert werden. Dabei ist das radiale Spiel der vormontierten Wälzkörper nach außen begrenzt, wodurch insbesondere die Montage des Außenrings vereinfacht wird.

Das Rollenlager ist zweckmäßigerweise als ein Pendelrollenlager ausgebildet. Das Pendelrollenlager dient insbesondere der sicheren Lagerung einer Welle, wobei es radiale und/oder axiale Kräfte aufnimmt und gleichzeitig die Rotation der Welle ermöglicht. Das Pendelrollenlager besitzt als Wälzkörper insbesondere zwei Rollenreihen mit symmetrischen Tonnenrollen, welche in zwei Käfigen geführt werden und der Außenring weist eine hohlkugelige Laufbahn auf. Die Tonnenrollen können sich auf der hohlkugeligen Laufbahn zwanglos einstellen. Dadurch ist das Pendelrollenlager winkeleinstellbar und kann winklige Wellenverlagerungen sowie Fluchtungsfehler der Lagersitzstellen ausgleichen.

### Kurze Beschreibung der Zeichnungen

Ausführungsbeispiele der Erfindung werden im Folgenden anhand einer Zeichnung näher erläutert. Darin zeigen:
- Fig. 1: einen Teilbereich eines Käfig für ein Rollenlager,
- Fig. 2: in einer weiteren Ansicht den Käfig gemäß Fig. 1,
- Fig. 3: in einem Querschnitt eine Detailansicht eines Eingriffs eines Haltevorsprungs des Käfigs gemäß Fig.1 in eine Ausnehmung eines Wälzkörpers,
- Fig. 4: den mit Wälzkörpern vormontierten Käfig gemäß Fig. 1,
- Fig. 5: in einer Detailansicht die Anordnung eines Wälzkörpers in dem Käfig gemäß Fig. 4, und
- Fig. 6: ein Ausführungsbeispiel eines Pendelrollenlagers mit zwei Käfigen gem. Fig. 1.

### Detaillierte Beschreibung der Zeichnungen

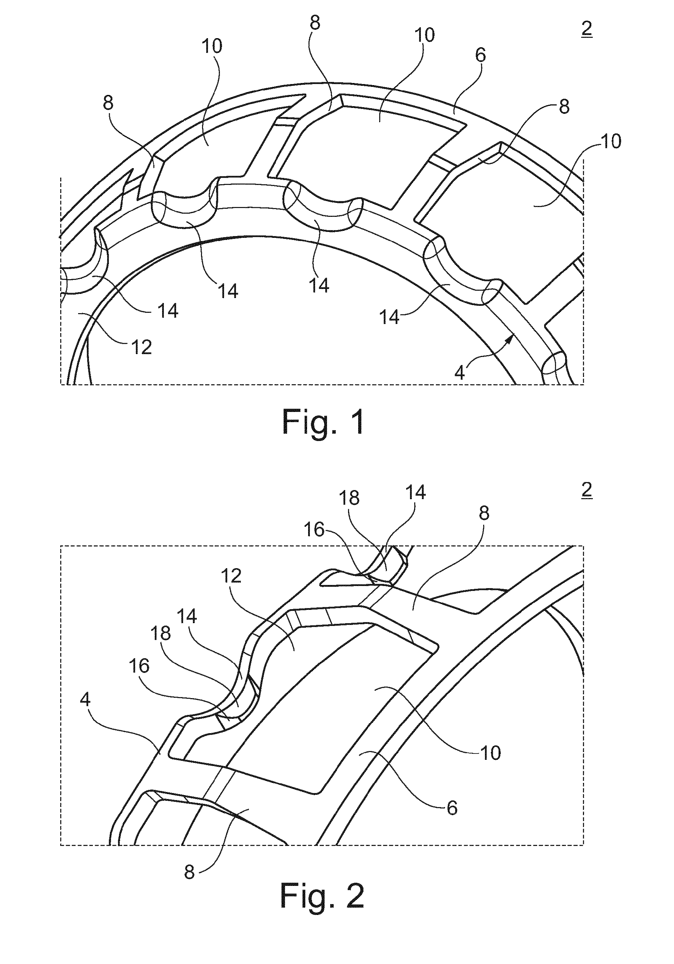

In Fig. 1 ist ein Teilbereich eines Käfigs 2 für ein Rollenlager dargestellt. Der Käfig 2 ist aus einem Stahlblech einstückig hergestellt. Der Käfig 2 umfasst einen ersten Seitenring 4 und einen zweiten Seitenring 6. Zwischen erstem Seitenring 4 und zweitem Seitenring 6 sind mehrere umfänglich gleich voneinander beabstandete und jeweils im Mittenbereich abgewinkelte Stege 8 angeordnet, welche sich axial zwischen den beiden Seitenringen 4, 6 erstrecken. Durch die beiden Seitenringe 8 und jeweils zwei benachbarte Stege 8 werden Taschen 10 zur Aufnahme von Wälzkörpern gebildet.

An dem ersten Seitenring 4 ist ein sich radial nach innen erstreckender Bund 12 angeformt. Der Bund 12 bietet im montierten Zustand eine axiale Anschlags- und Wegbegrenzungsfläche für Wälzkörper.

Im Bereich einer jeden Tasche 10 ist der erste Seitenring 6 als solcher entlang der Umfangsrichtung radial nach innen gewölbt. Dabei weist jede Wölbung 14 entlang der Umfangsrichtung im Wesentlichen die Kontur eines Kreisbogens auf.

In Fig. 2, in welcher der Käfig 2 gemäß Fig. 1 in einer weiteren Ansicht gezeigt ist, sind Haltevorsprünge 16 zur verliersicheren Halterung von Wälzkörpern zu erkennen. Die Haltevorsprünge 16 sind im Bereich einer jeden Wölbung 14 an der axial innen liegenden Stirnfläche des ersten Seitenrings 4 angeordnet. Dabei sind Wölbung 14 und Haltevorsprung 16 jeweils mittig zwischen zwei benachbarten Stegen 8 angeordnet.

Die Haltevorsprünge 16 erstecken sich axial in Richtung zum zweiten Seitenring 6, wobei die axiale Breite des Haltevorsprungs 16 zur Ausbildung einer Einführschräge 18 radial nach innen zunimmt. Damit ist das Profil eines Haltevorsprungs 16 im Wesentlichen nasenförmig ausgebildet. Durch die Ausbildung der Einführschräge 18 wird das Einsetzen eines Wälzkörpers in die Tasche 10 des Käfigs 2 erleichtert. Aufgrund der radial nach innen gerichteten Wölbungen 14 des ersten Seitenrings 4 liegen die Haltevorsprünge 16 jeweils radial weiter innen.

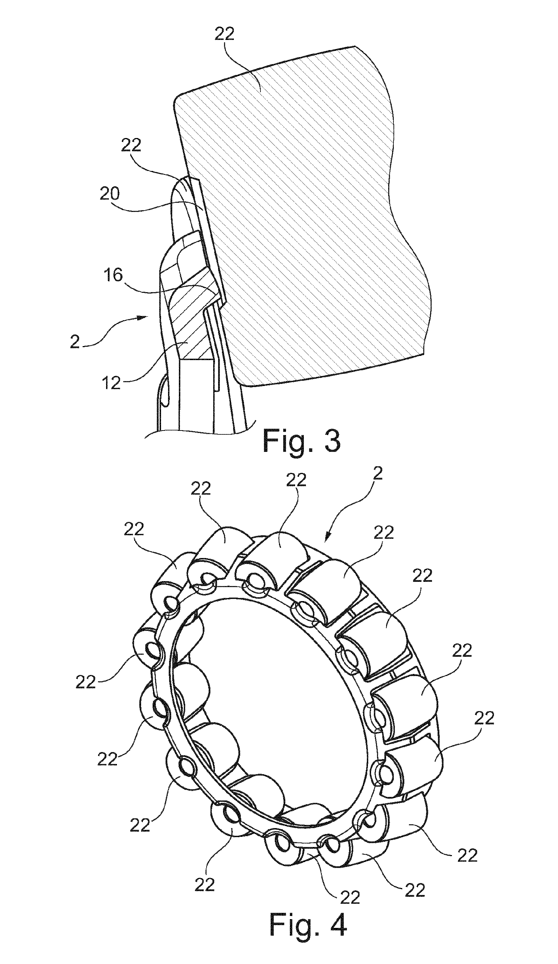

In Fig. 3 ist in einem Querschnitt eine Detailansicht eines Eingriffs eines Haltevorsprungs 16 des Käfigs 2 gemäß Figur 1 in eine stirnseitige Ausnehmung 20 eines als Tonnenrolle 22 ausgebildeten Wälzkörpers dargestellt. Bei der Ausnehmung 20 handelt es sich um eine kreisförmige Ausnehmung 20, die zentriert an der Stirnfläche der Tonnenrolle 22 angeordnet ist. Die axiale Erstreckung des Haltevorsprungs 16 korrespondiert mit der axialen Tiefe der Ausnehmung 20 der Tonnenrolle 22 derart, dass ein axiales Spiel der in die Tasche 10 eingesetzten Tonnenrolle 22 erhalten bleibt und die Tonnenrolle 22 nicht aus der Tasche 10 herausfallen kann. Auf diese Weise ist die Tonnenrolle 22 verliersicher in dem Käfig 2 vormontiert.

Durch den dargestellten Eingriff des infolge der eingebrachten Wölbung 14 radial weiter innen liegende Haltevorsprungs 16 in die Ausnehmung 20 wird zudem das radiale Spiel der Tonnenrolle 22 insbesondere nach außen begrenzt. Das zulässige radiale Spiel der Tonnenrolle 22 bei einer festgelegten Ausgestaltung von Haltevorsprung 16 und Ausnehmung 20 kann dabei durch die konkrete Ausgestaltung der Wölbung 14 festgelegt werden.

Durch die dargestellte Ausgestaltung des Käfigs 2 wird die Montage eines Rollenlagers vereinfacht. Es wird auf einfach Art das radiale Spiel der im Käfig 2 vormontierten Tonnenrollen 22 insbesondere nach außen begrenzt, wodurch insbesondere die Montage eines Außenrings vereinfacht wird. Die Tonnenrollen 22 können sich bei der Montage des vormontierten Käfigs innerhalb ihres radialen Spiels nur sehr begrenzt radial nach außen bewegen und behindern damit insbesondere nicht die Montage des Außenrings. Ferner kann hierdurch ein Zusammenstoß des Außenrings mit den Tonnenrollen 22 und dadurch Beschädigungen vermieden werden.

Fig. 4 zeigt den mit als Tonnenrollen 22 ausgebildeten Wälzkörpern vormontierten Käfig 2 gemäß Fig. 1. In den umfänglich im Wesentlichen gleich voneinander beabstandeten Taschen 10 ist jeweils eine Tonnenrolle 22 eingesetzt. Dabei weist die axial innenliegende Stirnfläche des ersten Seitenrings 4 im Bereich einer jeden dieser Taschen 10 eine Wölbung 14 und einen Haltevorsprung 16, wie in Fig. 1 - 3 gezeigt, auf. Der jeweilige Haltevorsprung 16 steht, wie in Fig. 3 dargestellt, mit der entsprechenden stirnseitigen Ausnehmung 20 der jeweiligen Tonnenrolle 22 in Eingriff. Damit sind alle Tonnenrollen 22 verliersicher im Käfig 2 vormontiert und dabei insbesondere in ihrem radialen Spiel nach außen begrenzt.

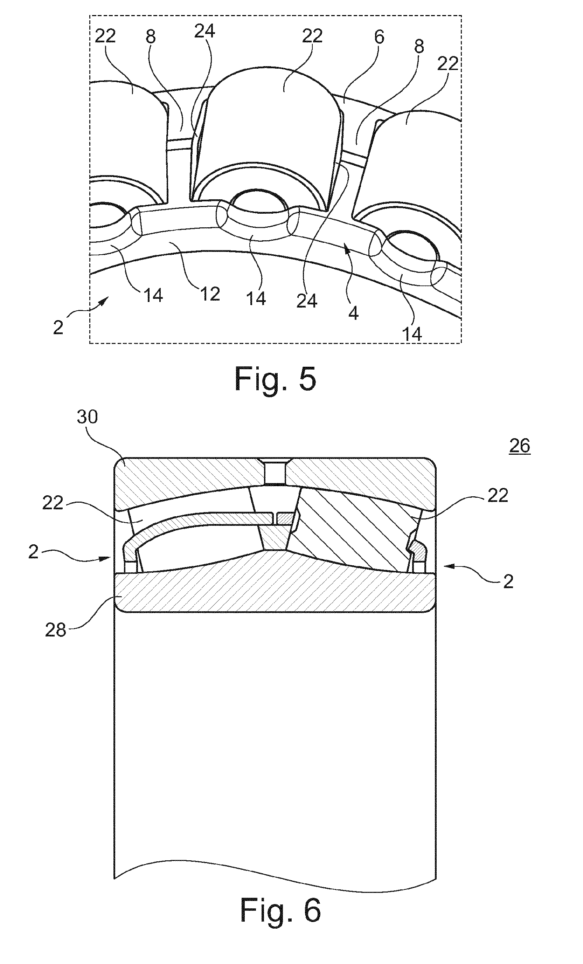

In Fig. 5 ist in einer Detailansicht die Anordnung eines als Tonnenrolle 22 ausgebildeten Wälzkörpers in dem Käfig 2 gemäß Fig. 4 dargestellt. Hierbei ist zu erkennen, dass durch die derart ausgestaltete verliersichere Haltung der Tonnenrollen 22 und die damit verbundene Anordnung der Haltevorsprünge 16 an der axial innen liegenden Stirnfläche des ersten Seitenrings 4, anstatt mittig an einem Steg 8, zwischen Steg 8 und Tonnenrolle 22 im Betrieb Zwischenräume 24 für die Schmiermittelzuführung und -verteilung erhalten werden. Zudem ist die Gefahr einer Beschädigung der Funktionsfläche einer Tonnenrolle 22 beim Einsetzen in den Käfig 2 durch an den Stegen 8 angeordnete Halteelemente ausgeschlossen.

Ein Ausführungsbeispiel eines Pendelrollenlagers 26 mit zwei Käfigen 2 gem. Fig. 1 ist in Figur 6 gezeigt. Das Pendelrollenlager 2 ist zur drehbaren Lagerung einer Welle (nicht dargestellt) ausgebildet. Zwischen einem Innenring 28 und einem Außenring 30 mit hohlkugeliger Laufbahn sind zwei Reihen symmetrischer Tonnenrollen 22 als Wälzkörper angeordnet. Die Tonnenrollen 22 können sich auf der hohlkugeligen Laufbahn des Außenrings 30 zwanglos einstellen. Dadurch ist das Pendelrollenlager 26 winkeleinstellbar und kann winklige Wellenverlagerungen sowie Fluchtungsfehler der Lagersitzstellen ausgleichen.

Die Tonnenrollen 22 einer jeden Reihe werden durch die beiden Käfige 2 jeweils gemäß Fig. 4 zu einem Tonnenrollenkranz zusammengefasst. Durch die Käfige 2 werden die Tonnenrollen 22 auf gleichmäßigen Abstand gehalten und an der gegenseitigen Berührung gehindert. Bei wechselnden oder ungleichen Belastungen auf die beiden Reihen von Tonnenrollen 22 können die Käfige 2 unterschiedliche Geschwindigkeiten annehmen.

Dabei greifen Haltevorsprünge 16 der Käfige 2, welche durch die in den ersten Seitenring 4 eingebrachten Wölbungen 14 radial weiter innen liegen, entsprechend der Detailansicht in Fig. 3, in die stirnseitigen Ausnehmungen 20 der Tonnenrollen 22 ein. Durch diese Ausgestaltung der Käfige 2 können die Tonnenrollen 22 verliersicher in den Käfigen 2 vormontiert werden. Dabei ist das radiale Spiel der vormontierten Tonnenrollen 22 nach außen begrenzt, wodurch die Montage des Pendelrollenlagers 26 insgesamt vereinfacht ist.

**Bezugszeichenliste**

| | |
|---|---|
| 2 | Käfig |
| 4 | erster Seitenring |
| 6 | zweiter Seitenring |
| 8 | Steg |
| 10 | Tasche |
| 12 | Bund |
| 14 | Wölbung |
| 16 | Haltevorsprung |
| 18 | Einführschräge |
| 20 | Ausnehmung |
| 22 | Tonnenrolle |
| 24 | Zwischenraum |
| 26 | Pendelrollenlager |
| 28 | Innenring |
| 30 | Außenring |

## Patentansprüche

1. Käfig (2) für ein Rollenlager (26), umfassend einen ersten (4) und einen zweiten (6) Seitenring und sich zwischen den Seitenringen (4, 6) axial ersteckende Stege (8), wobei die Seitenringe (4, 6) und jeweils zwei der Stege (8) eine Tasche (10) zur Aufnahme eines Wälzkörpers (22) bilden, und wobei der erste Seitenring (4) an seiner axial innenliegenden Stirnfläche im Bereich einer Tasche (10) einen axial in Richtung zum zweiten Seitenring (6) erstreckenden Haltevorsprung (16) aufweist, der mit einer stirnseitigen Ausnehmung (20) eines Wälzkörpers (22) in Eingriff bringbar ist, **dadurch gekennzeichnet, dass** der erste Seitenring (4) als solcher im Bereich des Haltevorsprungs (16) entlang der Umfangsrichtung radial nach innen gewölbt ist.

2. Käfig (2) nach Anspruch 1, **dadurch gekennzeichnet, dass** mehrere Taschen (10) ausgebildet sind, wobei die axial innen liegende Stirnfläche im Bereich einer jeden Tasche (10) einen Haltevorsprung (16) aufweist.

3. Käfig (2) nach Anspruch 1 oder 2, **dadurch gekennzeichnet, dass** sich der Haltevorsprung (16) in radialer Richtung über die radiale Höhe der Stirnfläche erstreckt.

4. Käfig (2) nach einem der vorhergehenden Ansprüche, **dadurch gekennzeichnet, dass** die axiale Breite des Haltevorsprungs (16) zur Ausbildung einer Einführschräge (18) radial nach innen zunimmt.

5. Käfig (2) nach einem der vorhergehenden Ansprüche, **dadurch gekennzeichnet, dass** am ersten Seitenring (4) und/oder am zweiten Seitenring (6) ein sich radial nach innen erstreckender Bund (12) angeformt ist.

6. Käfig nach einem der vorhergehenden Ansprüche, **dadurch gekennzeichnet, dass** er ein Blechkäfig (2) ist.

7. Käfig (2) nach einem der vorhergehenden Ansprüche, **dadurch gekennzeichnet, dass** er einstückig ausgeführt ist.

8. Rollenlager (26), umfassend einen Außenring (30) und einen Innenring (28), sowie eine Anzahl von Wälzkörpern (22), **dadurch gekennzeichnet, dass** die Wälzkörper (22) in einem Käfig (2) nach einem der Ansprüche 1 - 7 angeordnet sind.

9. Rollenlager nach Anspruch 8, **dadurch gekennzeichnet, dass** es als ein Pendelrollenlager (26) ausgebildet ist.
